# EUROPEAN PATENT SPECIFICATION

(11) **EP 3 068 841 B1**
(45) Date of publication and mention of the grant of the patent: **22.06.2022**
(21) Application number: 14810007.6
(22) Date of filing: 17.11.2014
(51) Int. Cl.: E21B 33/12, C08K 7/02, C09J 11/08, C09J 121/00, C09K 3/10

(54) **SWELLABLE SEALS AND THEIR USE**
QUELLBARE DICHTUNGEN UND DEREN VERWENDUNG
JOINTS D'ÉTANCHÉITÉ GONFLABLES ET LEUR UTILISATION

(30) Priority: 15.11.2013 NL 2011810
(43) Date of publication of application: 21.09.2016
(73) Proprietor: Harres B.V., 7903 BM Hoogeveen (NL)
(72) Inventor: SEYGER, Roger Martin, 7903 BM Hoogeveen (NL)
(74) Representative: V.O.
(86) International application number: PCT/NL2014/050789
(87) International publication number: WO 2015/072858

(56) References cited:
- WO-A1-2013/051937
- JP-A- H05 131 595

## Description

### BACKGROUND OF THE INVENTION

The invention is in the field of rubber compositions and their use. More specifically, the invention pertains to rubber seals that are able to swell (hereinafter also referred to as "swellable" or "swelling" rubber compositions) in fluids, in particular water-swellable and/or oil swellable and the use thereof.

WO-A-2005/012686 describes known water swellable rubber compositions, which comprise an elastomer matrix provided with a compound that is soluble in water, such as salt. When water comes into contact with these rubber compositions, permeation of formation water into the rubber matrix material will occur as a result of osmosis, due to the salt concentration in the salt particles (pure salt) being much higher than the salinity of the water itself. This leads to swelling of the rubber compositions. Therefore these compositions find use as a seal for sealing a space in a wellbore formed in an earth formation.

JP-A-05/131595 describes a water-swelling, anisotropic elastomer molding having a high degree of water swelling in a specific direction. These known water-swelling, anisotropic elastomer moldings comprise one or more composite sheets, each of the composite sheets consisting of a fabric coated with a high water-swelling elastomer. Construction of objects made from such composite material is not straightforward and requires special equipment.

JP-A-05/9340 describes water-swellable elastomer structures with fibers comprising a core with low water absorption surrounded by a superabsorbent sheath.

It would be desirable to have fluid-swellable rubber compositions that swell more efficiently upon contact with fluids such as water and/or oil. It is also desirable to have such compositions that are homogenous (*i.e.* non-composite) and can thus be processed more easily by conventional techniques into objects having the desired shapes.

Furthermore, for known swellable seals swelling behavior is in principle isotropic, which means that swelling occurs to the same degree in all directions. The present inventors realized that isotropic swelling may easily result for instance in damage to the rubber upon swelling when the rubber compositions are used in sealing wellbores. In this situation the rubber compositions are normally attached to the surface of the tubes and are required to swell in any case in a direction perpendicular to the tube's surface, in order to provide a proper seal. At the same time, however, due to the isotropic nature of the swelling, the rubber will swell in a direction parallel to the surface as well (both in the direction of the bore as well as in radial direction). As a result, considerable tension will build up and this can lead to rupture of the rubber, thus deteriorating the quality of the seal.

It would be highly desirable to have swellable rubber compositions that swell in an anisotropic manner. Furthermore it would be desirable if the swelling direction could be controlled, *viz.* if one direction of swelling could be favored respective to the directions perpendicular thereto.

A further disadvantage of known water-swellable rubber compositions is that swelling is inhomogeneous. It was found that a cross-sectional area displays high swell near the outer surface, whereas the inner core shows no or very limited swell. Swelling occurs from the outside towards the inside of the rubber material. However, the above-mentioned osmosis process relies on diffusion, which is a slow process. In practice only the outer few millimeter of the rubber product swells when contacted with fluids such as water. When these rubber products are used, for instance as seals, they need to be made of swellable rubber compositions that show a very high degree of swelling to make up for this inhomogeneous swelling behavior. This is disadvantageous, because the mechanical properties of known water-swellable rubbers were found to decrease with water uptake. In particular, when the amount of fluid in the rubber is high, the rubber composition may not be able to have sufficient sealing properties. It would be highly desirable to provide for a fluid-swellable rubber composition that swells homogeneously, *viz.* not just on or near the surface that is in contact with the water, but rather throughout the entire rubber product.

Thus it is an object of the present invention to provide seals of fluid-swellable elastomer compositions, which compositions upon contact with a fluid such as water swell more efficiently. A further object is to provide such compositions that swell upon contact with a fluid such as water in an anisotropic way. Yet a further object is to provide such compositions that swell homogeneously upon contact with a fluid such as water. A further object is to provide seals having a high mechanical strength, in particular a higher tear strength.

Geethamma et al. (Journal of Applied Polymer Science 55(1995)583-594) describe natural rubber compositions that are reinforced with coconut fibers. Swelling studies in a solvent are described. The degree of swelling is only used to obtain an idea about the extent of fiber orientation. Swelling in oil or water is not described or suggested by Geethamma *et al.,* nor are the advantages that can be obtained by employing this ability of the composition's oil and/or water swelling.

### BRIEF SUMMARY OF THE INVENTION

The present inventors realized that anisotropic swelling may be used with great advantage in sealing off spaces, in particular spaces in boreholes. It was found that the objects mentioned above can be met, at least in part, by providing a seal of a fluid-swellable rubber composition, which contains fibers. The fibers can be compounded with the rubber compositions using methods such as milling and extruding. The seals of the invention can be used for instance in off-shore applications, such as in sealing spaces in wellbores.

### BRIEF DESCRIPTION OF THE DRAWINGS

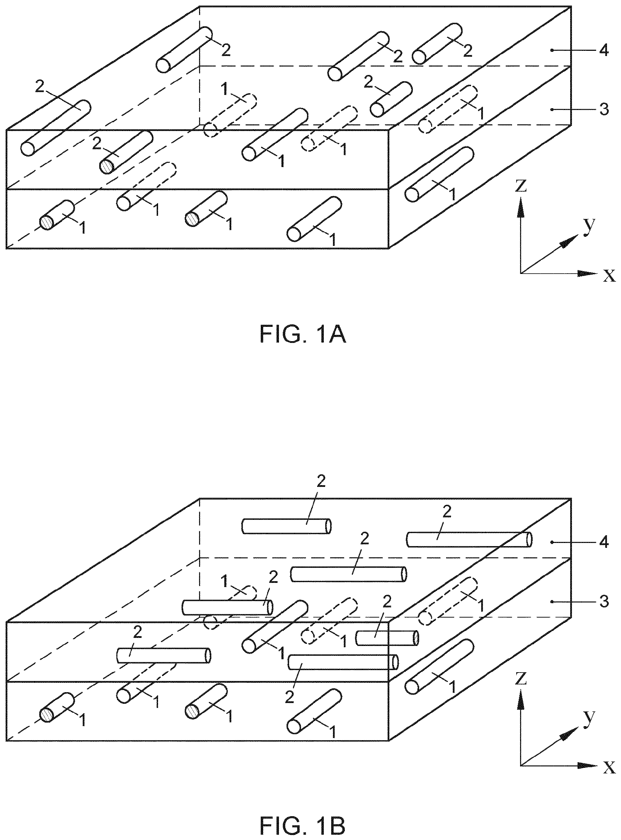

Figure 1 is a schematic representation of two different embodiments of rubber compositions in accordance with the present invention.

### DETAILED DESCRIPTION OF THE INVENTION

The present invention is directed to an elastomeric seal according to claim 1, the use of a seal according to claim 11, and the use of fibers in combination with at least one swell-inducing compound and/or fluid-soluble compound in an elastomer composition according to claim 12.

The elastomeric seals of the present invention swell anisotropically and as a result swelling upon contact with a fluid such as water and/or oil is very efficient. The seals show excellent mechanical properties when swollen, in particular a high tear strength (e.g. as measured using NEN-ISO 34-2:2011). As a result the seals can be used to seal off spaces in boreholes, while withstanding much higher pressures than seals of elastomeric compositions not containing any fibers.

The seals of the present invention also swell in a much more homogenous (albeit anisotropic) way than seals comprising the same elastomer without fibers. Without wishing to be bound by theory, it is believed that the fibers contribute to a more homogeneous distribution of the fluid throughout the matrix, so that the fluid can penetrate the seal better, thus contributing even more to efficient swelling behavior.

Swelling of a rubber object takes place starting from the outside of the object and is governed by the diffusion of the liquid into the object, *viz.* through the rubber matrix. It was found that objects made from conventional swellable rubber, *i.e.* without fibers, usually show a boundary layer that corresponds to the portion of the object that has actually swollen. This boundary layer may have a thickness of for instance 1-5 mm within one week of contact with liquid. By including the fibers in accordance with the present invention the swell process becomes more homogeneous, in that the thickness of this boundary layer is increased and may even be so large that it encompasses the entire object, depending on the size of the object. In accordance with the invention the swell rate can be increased so that the thickness of the boundary layer becomes for instance more than 10 mm within one week of contact with liquid, preferably more than 20 mm. Thus in another aspect the present invention provides liquid swellable rubber objects, in which the liquid penetrates at a higher rate than conventional rubber compositions without fibers. Because the swell is now more homogeneous, the rubber composition is used even more effectively for swell, since a larger proportion of the rubber volume contributes to the swell.

The term fiber, as used herein refers to any solid material that has a high aspect ratio (length/diameter), typically of for instance 5 or more. For practical purpose the following division can be made in terms of fiber length. Small fibers are fibers having a length of 1 mm or less. Long fibers have a length of more than 1 mm and 1 cm or less. Continuous fibers have a length of more than 1 cm. The length of a fiber is understood herein to be the fiber's longest dimension.

The fibers are preferably incorporated as separate fibers. Separate fibers are e.g. fibers which are neither woven nor bound nor fused to each other into a fabric.

In the particular embodiment a plurality of fabrics are incorporated in the elastomer matrix. In this particular embodiment, it is preferred that the plurality of separate fabrics are well dispersed throughout the elastomer matrix.

It will be appreciated that separate fibers may be combined with the plurality of separate fabrics in the elastomer matrix. Hence, the fibers according to the present invention are incorporated as separate fibers, a plurality of separate fabrics or a combination thereof.

The present invention differs from e.g. JP-A-05/131595 where a single continuous fabric (*i.e.* a cloth) is coated with rubber. By using a single continuous fabric, the control of the direction in which the seal may swell is limited, since the single continuous fabric limits swelling in two directions, corresponding to length and width of the single continuous fabric. Limiting swelling in *e.g.* one direction is not possible according JP-A-05/131595. The present invention enables a better control over the anisotropic swelling properties of the elastomer matrix. For fibers of non-circular cross-section the diameter can be taken as the equivalent diameter (*viz.* the diameter of a circle having the same surface area as the cross-sectional area of the non-circular fiber).

Suitable fibers are for instance aramid fibers, such as Twaron^{™} fibers. Aramid fibers are synthetic fibers (long-chain synthetic polyamide in which at least 85% of the amide linkages, (-CO-NH-) are attached directly to two aromatic rings) that are commercially available. All percentages as used herein are weight based, unless indicated otherwise.

Other suitable fibers are synthetic fibers like polyamide, glass fibers, polyester yarns, modified polyester yarns and combinations thereof. But also natural fibers like cotton, cellulose, coconut, sisal fibers and combinations thereof may be used. Combinations of these synthetic and natural fibers may also be used in accordance with the invention.

The fibers can be present in the composition in different amounts. Good results are obtained with compositions containing 0.1 to 15 wt.% fibers, preferably 1 to 8 wt.%, more preferably 2-7 wt.%, for instance approximately 5 wt%. If the amount is too low, limited result will be obtained. If the amount is too high it may be difficult to obtain a homogeneous distribution.

Preferably the fluid-swellable elastomers as used in the invention are water-swellable, oil-swellable or both. Water-swellable elastomers are preferably swellable in salt water or brine, such as formation water.

In order to increase the anisotropic swelling behavior, it is preferred to provide bonding between the fibers and the elastomer matrix. Bonding can be obtain by applying a suitable adhesive when mixing the fibers and the elastomer matrix. In a preferred embodiment fibers coated with an adhesive are used, such as Twaron^{™} fibers or other types of fibers coated for instance with phenolic based adhesives, silanes or combinations thereof.

The compositions of the invention can be prepared by compounding the elastomer together with the at least fluid-soluble compound, such as water-soluble compound and the at least one type of fiber using processing means known in the art, for instance by milling, extruding, calendering or combinations thereof. It is believed that the fibers are aligned into the processing direction due to the shear forces. The resulting "flow" results in preferred orientation of the fibers in the direction of milling, extrusion or calendering. Following this mixing step, the composition is usually vulcanized, which results in the formation of crosslinks in the elastomer. As a result the fiber orientation is fixed in place due to bonding between the fibers and the elastomer matrix. Vulcanization is carried out in the usual manner, for instance by adding a suitable crosslink agent and heating. Typical crosslinking agents are sulfur systems (such as N-cyclohexyl-2-benzothiazolesulfenamide (CBS) accelerated sulfur vulcanization), peroxides, urethane crosslinkers, metallic oxides, and/or acetoxysilane.

When two or more fibers are "oriented", within the meaning of the present invention, it is intended to refer to the situation wherein the length axis of substantially all of the fibers run in substantially the same three dimensional direction. "Substantially all of the fibers" means the majority, preferably more than 90%, of all fibers present in a certain sample wherein said oriented fibers are present. "Substantially the same direction" means the fibers are aligned as a result of the processing step and no longer pointing in random directions.

In a preferred embodiment, seals according to the invention comprise multiple sheets of rubber, wherein in each sheet the fibers are oriented vis-à-vis each other. Multiple sheets may be stacked, wherein the orientation of the fibers in one sheet may be the same as in one or more of the other sheets. However, it is also possible to stack one or more sheets wherein the fibers have a certain orientation, for instance running predominantly in the x-direction on one or more sheets wherein the fibers have another orientation, for instance running predominantly in the *y-*direction, as schematically depicted in figures 1a and 1b.

The sheets can be stacked on top of each other and can be subsequently bonded, preferably by crosslinking to form a composite seal of the invention.

Figures 1a and 1b schematically depict the embodiments comprising two or more sheets.

In figure 1a a first sheet (3) comprises fibers (1) that run generally in the *y*-direction. On top of sheet (3) is present a second sheet (4), comprising fibers that run also predominantly in the *y*-direction.

The embodiment of figure 1b is similar to that of figure la, but here second sheet (4), comprises fibers that run in the x-direction, *viz.* in a parallel plane, but perpendicular to the fibers in sheet (3).

For both embodiments further sheets with oriented fibers may be present on top of sheet (4) or below sheet (3).

The embodiment of figure 1b is a particularly preferred according to the present invention, because it was found that the swell of the resulting seal comprising two or more sheets stacked in this way almost only takes place in the *z*-direction. As a result of the orientation of the fibers in the different layers, swell in the other directions is prevented. This means that the present invention provides for controlling the direction of swell, which is highly desirable in view of the objectives and applications mentioned above.

The compositions for use in the present invention may further comprise one or more swell-inducing compounds, such as:
- poly-electrolytes;
- super absorbing polymers (SAPs), such as sodium polyacrylate and acrylic acids;
- hydrophilic clays, such as sodium bentonite particles (e.g. Wyoming Bentonite); or
- natural water swelling materials, such as wood, cork or cellulose fillers.

Furthermore, the compositions for use in the present invention may contain one or more fluid-soluble compounds, such as salt. For this purpose, preferably salts are used having a water-solubility of 360 g/dm³ (NaCl) or more. Suitable fluid-soluble compounds are fine particles, in particular fine particles of salt, preferably a dissociating salt, which can be uniformly compounded into the base rubber. For example extremely fine salt particles which are water soluble may be used.

The salt is preferably a salt wherein the anion is selected from the group of: acetate; bicarbonate; carbonate; formate; halide; hydrosulfide; hydroxide; imide; nitrate; nitride; nitrite; phosphate; sulfide; sulfate; and combinations thereof.

The cation can be a metal or another positive ion, such as an ammonium ion. Preferably the cation is chosen from Na⁺, K⁺, Ca²⁺, NH⁴⁺ and combinations thereof.

The preferred salts are NaCl and CaCl₂.

Because of the presence of the fibers in the seals of the invention it was found that the amount of fluid that is needed to obtain a certain amount of swelling in a specific direction is considerably lower as compared to seals made from compositions not containing fibers, in which the swelling is isotropic. Without wishing to be bound by theory, the amount of swelling for a certain elastomer composition expressed in the volume change is believed to be approximately the same for a sample wherein the fibers are oriented in accordance with the invention and a sample wherein the fibers are not oriented. However, due to the orientation of the fibers swelling in a particular direction can be minimized, and as a result the swelling in the other direction can be much higher as compared to the sample wherein the fibers or not oriented. As a result the amount swell-inducing compounds (such as SAPs) and/or the amount of fluid soluble compounds (such as salts) may be considerably lower in the seals of the present invention, while providing the same amount of effective swell. At the same time, the risk of formation of cracks is smaller with the seals of the invention, since the swelling direction can be controlled so that the majority of the swell is in a desired direction, typically perpendicular to the surface of the casing to which the seal is normally bonded.

Suitable elastomers are rubber materials which, apart from swelling in water, also swell in crude oil present in petroleum wells, such as ethylene propylene rubber (EPM and EPDM); ethylene- propylene-diene terpolymer rubber (EPT); butyl rubber (IIR); brominated butyl rubber (BIIR); chlorinated butyl rubber (CIIR); chlorinated polyethylene (CM/CPE); neoprene rubber (CR); epichlorohydrin ethylene oxide copolymer (CO, ECO); styrene butadiene copolymer rubber (SBR); sulphonated polyethylene (CSM); ethylene acrylate rubber (EAM/AEM); silicone rubbers (VMQ); and fluorsilicone rubber (FVMQ).

Also suitable are rubber materials which do not swell, or swell only to a minimal extent in crude oil, such as butadiene acrylonitrile copolymer (nitrile rubber, NBR); hydrogenated NBR (HNBR, HNS), such as ZETPOL^{™}, TORNAC^{™}, TERBAN^{™}; NBR with reactive groups (X-NBR); perfluoro rubbers (FFKM) such as KALREZ^{™}, CHEMRAZ^{™}; fluoro rubbers (FKM), such as VITON^{™}, FLUOREL^{™}; and tetrafluorethylene/propylene (TFE/P), such as AFLAS^{™}.

Most of these elastomers can be crosslinked by more than one crosslinking agent (*e.g*. either sulfur crosslinked or peroxide crosslinked).

Apart from the thermoset (non swelling and oil swelling) elastomer matrix materials quoted above, also blends of elastomers can be applied (so called "elastomeric alloys"). Although an almost inexhaustible combination of thermoplastic and thermoset elastomers are feasible, the most preferred are the EPDM/polypropylene blends such as SARLINK^{™}, Levaflex^{™}, Santoprene^{™}, NBR-polypropylene blends such as GEOLAST^{™}, NBR/polyvinylchloride blends and NR/polypropylene blends. All of these have a tendency to swell in petroleum crudes, especially at the targeted downhole well temperatures.

The water-swellable elastomer compositions for use in the present invention may further comprise other ingredients, in particular plasticizers, such as polyester or polyether plasticizers; additives to increase the mechanical properties, such as carbon blacks or silica fillers; crosslinkers, such as sulfur or peroxide type crosslinkers; crosslinking promotors, such as (iso)cyanurates or methacrylates.

Suitably an elastomer is used in combination with a polar super absorbing polymer (SAP) and a salt, whereby the polar SAP is grafted onto the backbone of the elastomer. Such system has the advantage that the polar SAP particles tend to retain the salt particles in the elastomer matrix thereby reducing leaching of the salt from the elastomer. The polar salt is attracted by electrostatic forces to the polar SAP molecules, which are grafted ("glued") to the backbone of the rubber.

The elastomer compositions of the present invention can be processed into articles having excellent anisotropic swelling behavior, making them very suitable for offshore and geothermal drilling applications, in particular as borehole packers, *i.e.* seals used for sealing off spaces in boreholes.

The swelling of the compositions of the present invention is anisotropic, *i.e.* the swelling in the direction of the length of the fibers (longitudinal direction) is different from the swelling in the direction perpendicular thereto (transversal direction). The swelling ratio is the relative size increase of a sample due to swelling. With reference to figure la, the longitudinal direction is the *y*-direction and the transversal directions are the *x*- and *z*-direction.

In accordance with the present invention, the swelling in the longitudinal direction is lower than the swelling in the directions perpendicular to the longitudinal direction, because the swelling in the longitudinal direction is more restricted.

The anisotropic swelling behavior can be characterized by the transversal swelling ratio *aT* and the longitudinal swelling ratio *α_{L}.* Swelling ratio is the relative increase in length in a given direction. Typically the seals of the invention may be characterized by a value of *aT* that is more than 0.5, for instance between 0.6 and 0.9. Typically *α_{L}* of the seals of the invention is between 0.1 and 0.4, for instance between 0.15 and 0.25. These values are end values, which are typically obtained after contacting the materials of the invention with the swelling fluid for more than 7 days, preferably more than 14 days.

The increase in height, resembled by the *α*_{Z} value may be even higher then the former ones and is important for sealing. This is the increase in height of the seal and determines the maximum gap between seal and outer wall/hole that can be overcome by the seal once fully swollen. The effect is even more pronounced when the fibers are preferably aligned in two directions in one plane. The *α*_{z} value then increases from 0.86 to 0.96. In this case however the *α*_{T} value is considerably decreased whereas the *α*_{L}-value is only slightly increased. This is due to the fact that each subsequent layer was placed perpendicular to the previous one in preparing the sample. Hence the main fiber orientation will be largely perpendicular between each used sheet in the sample preparation. Due to this orientation swelling will be restricted in these directions. On the other hand as is the case with the previous example swelling in the *α*_{Z} is still possible without difficulties.

The swelling of the seals of the present invention was found to be much more homogeneous as compared to similar rubber compositions without the fibers.

Since in accordance with the present invention the swelling can be controlled in a certain direction, and since the swelling is more homogeneous, the amount of fluid-soluble compound can be lower, while still an appropriate amount of swelling is obtained. This is very advantageous, because lower concentrations of fluid-soluble compounds result in rubber compositions having improved mechanical properties as compared to similar compositions without fibers, in particular when these compositions are in a swollen state. In other words, in accordance with the present invention the same amount of swell can be attained with less fluid-soluble compound, as is also demonstrated in the examples hereinbelow.

### Example 1

A sample batch in accordance with the present invention was made by compounding HNBR elastomer with aramid fibers (Twaron^{™}, coated with an adhesive). The composition furthermore contained 5 wt.% NaCl as a swell-inducing compound. The resulting composition was calendared into a long sheet 100 - 200 mm in width and 1-2 mm thick. The direction of calendering was marked on the sheet. The test sample was prepared from this calendered sheet. Thin layers were cut from the calendered sheet in the direction of the length of the calendered sheet. These sheets were put on top of each other in such a way that they were all aligned in the direction of calendering (figure la). Subsequently this sample was crosslinked and simultaneously bonded to the metal plate at 165 °C. In this case a semi-efficient sulfur vulcanization was used.

A test sample was cut measuring 50 mm × 50 mm × 13 mm (length × width × height).

The test sample weighed 98.77 g and had a hardness of 78 °Shore A. Swelling behavior was monitored by submerging the sample in a 3 wt.% NaCl solution and following the change in dimensions in the course of one week. The following results were obtained.

**Table 1. Results swelling Example 1**

| Duration / days | hardness / °ShA | weight change / % | *a*_{Z} change / % | *a*_{T} change / % | *a*_{L} change / % |
|---|---|---|---|---|---|
| 0 | 78 | 0 | 0 | 0 | 0 |
| 1 | 35 | 25.3 | 30.8 | 22.5 | 10.4 |
| 2 | 30 | 39.9 | 46.2 | 34.1 | 13.2 |
| 5 | 33 | 64.1 | 73.9 | 49.8 | 19.5 |
| 6 | 33 | 68.8 | 80.2 | 54.7 | 20.1 |
| 7 | 43 | 72.6 | 85.8 | 56.1 | 20.1 |

As can be seen from these results, the swelling in the length direction (longitudinal direction) was considerably lower than the swelling in the *a*_{T} and *a_{Z}* directions perpendicular to the longitudinal direction. Due to the fact that only a small part of fibers will be oriented normal to the calendering direction together with the fact that swelling is not restricted by the bonded metal plate there will be a higher degree of swelling in the *a*_{Z} direction than either *a*_{T} and *a*_{L} directions.

### Example 2

The same sample batch and vulcanization procedure were used as in Example 1. The only difference being that the layers were put perpendicular upon each other with regard to calender (fiber) direction. In this case fibers were perpendicular to each other from layer to layer (see figure lb).

A test sample was cut measuring 50mm × 50 mm × 13 mm (length × width × height). The calendering had resulted in the fibers being oriented mainly in the length and width direction of the test sample.

The test sample weighed 98.19 g and had a hardness of 78 °Shore A. Swelling behavior was monitored by submerging the sample in a 3 wt.% NaCl solution and following the change in dimensions in the course of one week. The following results were obtained.

**Table 2. Results swelling Example 2**

| Duration / days | hardness / °ShA | weight change / % | *a*_{Z} change /% | *a*_{T} change / % | *a*_{L} change / % |
|---|---|---|---|---|---|
| 0 | 78 | 0 | 0 | 0 | 0 |
| 1 | 35 | 25.5 | 32.6 | 16.7 | 18.2 |
| 2 | 30 | 40.2 | 49.5 | 20.7 | 20.0 |
| 5 | 31 | 63.5 | 82.7 | 32.1 | 31.6 |
| 6 | 33 | 68.4 | 90.4 | 33.6 | 32.4 |
| 7 | 33 | 72.3 | 96.0 | 36.1 | 32.7 |

From these results it follows that the swelling in the *a*_{T} and *a*_{L} direction was considerably lower than the swelling in the *a*_{Z} direction perpendicular to the other two directions.

## Claims

1. Elastomeric seal for sealing bore holes and the like comprising a fluid-swellable elastomer composition, which comprises an elastomer matrix and fibers (1, 2) of at least one type, wherein said fibers (1, 2) are oriented, and wherein said fibers are incorporated as separate fibers, a plurality of separate fabrics or a combination thereof, further comprising at least one swell-inducing compound, at least one fluid-soluble compound, or combinations thereof, wherein the at least one swell-inducing compound and/or the at least one fluid-soluble compound, and the fibers are separate constituents of the composition.

2. Seal according to the previous claim, which contains 0.1 to 15 wt.% of said fibers (1, 2).

3. Seal according to any of the previous claims, wherein said fibers (1, 2) are selected from aramid, (modified) polyester yarns or cotton, cellulose, coconut and sisal fibers, and combinations thereof.

4. Seal according to any of the previous claims, which is water-swellable.

5. Seal according to any of the previous claims, which is oil-swellable.

6. Seal according to any of the previous claims, which comprises two or more sheets (3, 4), wherein at least two sheets (3, 4) comprise a fluid-swellable elastomer composition wherein said fibers are oriented.

7. Seal according to the previous claim, comprising a sheet wherein the fibers run in a direction that is different from the direction of the fibers present in at least one other sheet.

8. Seal according to any of the previous claims, wherein said elastomer matrix comprises an elastomer selected from the group consisting of: rubber materials which, apart from swelling in water, also swell in crude oil; rubber materials which do not swell in crude oil; and combinations thereof.

9. Seal according to any of the previous claims, wherein said fibers are continuous fibers having a length of more than 1 cm.

10. Seal according to the previous claim, wherein said fibers are present in a plurality of separate fabrics.

11. Use of a seal according to any of the previous claims, as a permanent or retrievable packer, seal assembly, seal spacer, tubing seal, casing seal assembly, wire-line or coil-tubing conveyed sealing assembly, a sealing plug or valve.

12. Use of fibers in combination with at least one swell-inducing compound and/or fluid-soluble compound in an elastomer composition, wherein said fibers are oriented, and wherein said fibers are incorporated as separate fibers, a plurality of separate fabrics or a combination thereof, wherein Z the at least one swell-inducing compound and/or fluid-soluble compound, and the fibers are separate constituents of the composition, to obtain anisotropic water swelling, oil swelling, or combinations thereof.

## Patentansprüche

1. Elastomere Dichtung zum Abdichten von Bohrlöchern und dergleichen, umfassend eine flüssigkeitsquellbare Elastomerzusammensetzung, die eine Elastomermatrix und Fasern (1, 2) wenigstens eines Typs umfasst, wobei die Fasern (1, 2) ausgerichtet sind, und wobei die Fasern als separate Fasern, eine Vielzahl von separaten Geweben oder eine Kombination davon inkorporiert sind, ferner umfassend wenigstens eine quellungsinduzierende Verbindung, wenigstens eine flüssigkeitslösliche Verbindung, oder Kombinationen davon, wobei die wenigstens eine quellungsinduzierende Verbindung und/oder die wenigstens eine flüssigkeitslösliche Verbindung, und die Fasern separate Bestandteile der Zusammensetzung sind.

2. Dichtung nach dem vorhergehenden Anspruch, die 0,1 bis 15 Gew.-% der Fasern (1, 2) enthält.

3. Dichtung nach einem der vorhergehenden Ansprüche, wobei die Fasern (1, 2) ausgewählt sind aus Aramid-, (modifizierten) Polyestergarnen oder Baumwoll-, Zellulose-, Kokos- und Sisalfasern, und Kombinationen davon.

4. Dichtung nach einem der vorhergehenden Ansprüche, die wasserquellbar ist.

5. Dichtung nach einem der vorhergehenden Ansprüche, die ölquellbar ist.

6. Dichtung nach einem der vorhergehenden Ansprüche, die zwei oder mehr Bögen (3, 4) umfasst, wobei wenigstens zwei Bögen (3, 4) eine flüssigkeitsquellbare Elastomerzusammensetzung umfassen, wobei die Fasern ausgerichtet sind.

7. Dichtung nach dem vorhergehenden Anspruch, umfassend einen Bogen, wobei die Fasern in einer Richtung verlaufen, die von der Richtung der Fasern, vorhanden in wenigstens einem anderen Bogen, verschieden ist.

8. Dichtung nach einem der vorhergehenden Ansprüche, wobei die Elastomermatrix ein Elastomer umfasst, ausgewählt aus der Gruppe, bestehend aus: Kautschukmaterialien, die außer dem Quellen in Wasser auch in Rohöl quellen; Kautschukmaterialien, die in Rohöl nicht quellen; und Kombinationen davon.

9. Dichtung nach einem der vorhergehenden Ansprüche, wobei die Fasern Endlosfasern mit einer Länge von mehr als 1 cm sind.

10. Dichtung nach dem vorhergehenden Anspruch, wobei die Fasern in einer Vielzahl von separaten Geweben vorhanden sind.

11. Verwendung einer Dichtung nach einem der vorhergehenden Ansprüche, als permanenter oder wiederherstellbarer Packer, Dichtungsaufbau, Dichtungsabstandshalter, Schlauchdichtung, Gehäusedichtungsaufbau, Drahtleitung oder Spiralschlauch vermittelter Dichtungsaufbau, Dichtungsstopfen oder -ventil.

12. Verwendung von Fasern in Kombination mit wenigstens einer quellungsinduzierenden Verbindung und/oder flüssigkeitslöslichen Verbindung in einer Elastomerzusammensetzung, wobei die Fasern ausgerichtet sind, und wobei die Fasern als separate Fasern, eine Vielzahl von separaten Geweben oder eine Kombination davon inkorporiert sind, wobei die wenigstens eine quellungsinduzierende Verbindung und/oder flüssigkeitslösliche Verbindung, und die Fasern separate Bestandteile der Zusammensetzung sind, um anisotropes Wasser-Quellen, Öl-Quellen, oder Kombinationen davon zu erhalten.

## Revendications

1. Joint élastomère pour sceller des trous de forage et similaires comprenant une composition élastomère gonflable par fluide, qui comprend une matrice élastomère et des fibres (1, 2) d'au moins un type, dans lequel lesdites fibres (1, 2) sont orientées, et dans lequel lesdites fibres sont incorporés sous forme de fibres séparées, une pluralité de tissus séparés ou une combinaison de ceux-ci, comprenant en outre au moins un composé induisant un gonflement, au moins un composé soluble dans les fluides, ou des combinaisons de ceux-ci, dans lequel le au moins un composé induisant un gonflement et/ou le au moins un composé soluble dans les fluides, et les fibres sont des constituants distincts de la composition.

2. Joint selon la revendication précédente, qui contient de 0,1 à 15 % en poids desdites fibres (1, 2).

3. Joint selon l'une quelconque des revendications précédentes, dans lequel lesdites fibres (1, 2) sont choisies parmi les fils d'aramide, de polyester (modifié) ou les fibres de coton, de cellulose, de noix de coco et de sisal, et leurs combinaisons.

4. Joint selon l'une quelconque des revendications précédentes, qui est gonflable à l'eau.

5. Joint selon l'une quelconque des revendications précédentes, qui est gonflable à l'huile.

6. Joint selon l'une quelconque des revendications précédentes, qui comprend deux ou plusieurs nappes (3, 4), dans lequel au moins deux nappes (3, 4) comprennent une composition élastomère gonflable par fluide dans laquelle lesdites fibres sont orientées.

7. Joint selon la revendication précédente, comprenant une nappe dans laquelle les fibres s'étendent dans une direction différente de la direction des fibres présentes dans au moins une autre nappe.

8. Joint selon l'une quelconque des revendications précédentes, dans lequel ladite matrice élastomère comprend un élastomère choisi dans le groupe constitué par : les matériaux caoutchouteux qui, outre le gonflement dans l'eau, gonflent également dans le pétrole brut ; les matériaux caoutchouteux qui ne gonflent pas dans le pétrole brut ; et leurs combinaisons.

9. Joint selon l'une quelconque des revendications précédentes, dans lequel lesdites fibres sont des fibres continues ayant une longueur supérieure à 1 cm.

10. Joint selon la revendication précédente, dans lequel lesdites fibres sont présentes dans une pluralité de tissus distincts.

11. Utilisation d'un joint selon l'une quelconque des revendications précédentes, en tant que garniture d'étanchéité permanente ou récupérable, ensemble de joint, entretoise de joint, joint de tube, ensemble de joint de tubage, ensemble d'étanchéité convoyé par câble ou serpentin, bouchon ou vanne d'étanchéité.

12. Utilisation de fibres en combinaison avec au moins un composé inducteur de gonflement et/ou un composé hydrosoluble dans une composition élastomère, dans laquelle lesdites fibres sont orientées, et dans laquelle lesdites fibres sont incorporées sous forme de fibres séparées, une pluralité de tissus séparés ou une combinaison de ceux-ci, dans laquelle le au moins un composé inducteur de gonflement et/ou composé soluble dans les fluides, et les fibres sont des constituants séparés de la composition, pour obtenir un gonflement à l'eau, un gonflement à l'huile, ou des combinaisons de ceux-ci qui est anisotrope.
